# EUROPÄISCHE PATENTSCHRIFT

(11) **EP 1 404 596 B1**
(45) Veröffentlichungstag und Bekanntmachung des Hinweises auf die Patenterteilung: **18.01.2006**
(21) Anmeldenummer: 02754698.5
(22) Anmeldetag: 18.06.2002
(51) Int. Cl.: B65G 1/04, B65G 47/22, B65G 1/137

(54) **REGALBEDIENGERÄT UND VERFAHREN ZUM BEDIENEN EINES PRODUKTLAGERREGALS INSBESONDERE EINER KOMMISSIONIERVORRICHTUNG**
STORAGE AND RETRIEVAL UNIT AND METHOD FOR CONTROLLING PRODUCT STORAGE SHELVING, ESPECIALLY A COMMISSIONING DEVICE
GERBEUR ET PROCEDE PERMETTANT DE DESSERVIR UN RAYONNAGE D'ENTREPOT NOTAMMENT UN DISPOSITIF DE PREPARATION DE COMMANDES

(30) Priorität: 27.06.2001 DE 10130984
(43) Veröffentlichungstag der Anmeldung: 07.04.2004
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2002/006707
(87) Internationale Veröffentlichungsnummer: WO 2003/002432

(56) Entgegenhaltungen:
- EP-A- 0 866 002
- DE-A- 4 235 576
- US-A- 3 674 159
- US-A- 5 921 377

## Beschreibung

Die Erfindung betrifft ein Regalbediengerät und ein Verfahren zum Bedienen eines Produktlagerregals, welches zumindest einen Regalboden aufweist, auf dem im wesentlichen kubische Produkte angeordnet, gehalten, entnehmbar und einem angetriebenen, im wesentlichen horizontalen Endlosband des höhenverstellbaren und längs des Produktlagerregals beweglichen Regalbediengeräts zuführbar sind, wobei die entnommenen Produkte durch eine Zentriervorrichtung zentriert werden.

Ein Regalbediengerät der vorgenannten Art ist beispielsweise aus EP 0 866 002 A2 bekannt, mit dessen Hilfe Kommissionierprodukte aus dem Produktlagerregal entnommen, aber auch Produkte in das Produktlagerregal eingebracht werden können, und zwar mittels zweier Endlosbänder, wobei längsendseitig jeweils ein Bedienfinger ausbildet ist. Das Regalbediengerät wird für eine Produktentnahme aus einem schrägen Lagerregal mit seinem Bedienfinger unter dem untersten vordersten Produkt des Lagerregals plaziert. Dann wird das Regalbediengerät angehoben, so daß der Bedienfinger bzw. das vorderste Ende des Endlosbandes auch angehoben wird, das vorderste unterste Produkt aus dem Produktlagerregal untergreift, das Produkt über einen Stopper anhebt und auf diese Weise auf das Endlosband des Regalbediengeräts plaziert. Bei der Produktentnahme schieben im Lagerregal verbleibende Produkte aufgrund ihres Eigengewichts das vorderste Produkt aus dem Regal. Die auf das Endlosband geförderten Produkte werden durch eine zentrale Zentriervorrichtung in Form von verstellbaren Produkt-Seitenführungen zentriert, die auf jeder Seite des Endlosbandes in Form von zwei abgewinkelten Leitschienen vorgesehen sind. Die beiden Leitschienen werden bezüglich der Querrichtung des Endlosbandes gleichzeitig seiten- und höhenverstellt. Von Nachteil ist, daß nur gleich konfigurierte Produkte bzw. Stückgüter durch die beiden Leitschienen geführt bzw. zentriert werden können.

Aufgabe der Erfindung ist, ein Regalbediengerät der eingangs genannten Art derart auszubilden, daß auch unterschiedlich konfigurierte kubische Produkte auf einfache, zuverlässige und schnelle Weise gehandhabt werden können.

Aufgabe der Erfindung ferner ist, ein einfaches zuverlässiges Verfahren für ein Entnehmen von Produkten aus einem Produktlagerregal mit Hilfe eines Regalbediengeräts der eingangs genannten Art bereitzustellen.

Gelöst wird die der Erfindung zugrundeliegende Aufgabe durch ein Regalbediengerät mit den im Anspruch 1 angegebenen Merkmalen.

Vorteilhaft weitergebildet wird das Regalbediengerät durch die Merkmale der abhängigen Ansprüche 2 bis 11.

Ein erfindungsgemäßes Verfahren kennzeichnet sich durch die Merkmale des Anspruchs 12.

Vorteilhaft weitergebildet wird das erfindungsgemäße Verfahren durch die Merkmale der abhängigen Ansprüche 13 bis 22.

Ein wesentlicher Erfindungsaspekt ist, daß die Zentriervorrichtung einen auf einer Querseite des Endlosbandes im Bereich zumindest eines Längsendes des Endlosbandes angeordneten Produkt-Seitenzentrierer, vorzugsweise ein Zentriererblech, umfaßt. Der oder die seitlichen Zentriererbleche werden auf die Produktbreite bzw. entsprechend der Produktbreite eingestellt. Der Effekt des seitlichen Verschiebens der Produkte wird durch Verfahren des Endlosbandes und eines gegebenenfalls vorgelagerten Verlängerungsbandabschnittes erzeugt. Das Endlosband ist auf Seite des seitlichen Längsanschlages mit dem Zentriererblech verbunden. Dadurch werden die Produkte nach einem Entnehmen aus dem Produktspeicher, vorzugsweise durch Bedienfinger, im auf die Produktbreite eingestellten Produkt-Seitenzentrierer zentriert, und dadurch immer einseitig am Endlosband ausgerichtet und auf diesem gespeichert. Die Produkte liegen dann am seitlichen Längsanschlag an. Der Produkt-Seitenzentrierer kann konische Anlaufflächen in Form von vertikalen Leitblechen besitzen, die den Produktdurchlauf ohne Verklemm-Möglichkeit erleichtern.

Der Längsanschlag ist länger als die Längserstreckung des Endlosbandes und besitzt vorzugsweise vorgenannte Verlängerungsbandabschnitte auf beiden Längsseiten des Regalbediengeräts. Durch Plazieren bzw. seitliches Verschieben der aus dem Produktlagerregal entnommenen Produkte bis hin zum Längsanschlag werden die kubischen Produkte unabhängig von ihrer Dimensionierung längs des Längsanschlages in einem Winkel zum Endlosband positioniert und mithin seitlich zentriert.

Der Begriff "kubische Produkte" umfaßt auch nahezu kubische Produkte, z. B. auch Flaschen mit nahezu kubischer Form und entsprechend kurzem Flaschenhals, beispielsweise kubische Kunststoff-Flaschen für pharmazeutische Mittel.

Im Gegensatz zum vorgenannten Stand der Technik können also durch die Erfindung auch unterschiedlich große kubische Produkte (große und kleine Würfel, große und kleine und insbesondere auch schlanke Quader) eines Produktlagerregals insbesondere einer Kommissioniervorrichtung mit Hilfe des Regalbediengeräts gleichzeitig gehandhabt werden.

Der Produkt-Seitenzentrierer, von dem vorzugsweise an jedem Längsende des Endlosbandes ein Produkt-Seitenzentrierer, d.h. zwei Produkt-Seitenzentrierer vorgesehen sind, die miteinander fest verbunden sind, wird von einem Zentrier-Antrieb angetrieben, der von einer zentralen Steuereinheit angesteuert ist, welche auch den Endlosband-Antrieb ansteuert. Der Verschiebeweg oder Einstellweg des Produkt-Seitenzentrierers entspricht der Breite eines zu handhabenden Produktes und wird entsprechend von der zentralen Steuereinheit eingestellt. Es versteht sich, daß das Produkt nicht unter Kraftaufwand an den Längsanschlag gepreßt, sondern nur "lose" in den Winkel zwischen dem Längsanschlag und dem Obertrum des Endlosbandes plaziert wird. Befinden sich unterschiedlich dimensionierte Produkte derart plaziert auf einem Endlosband, insbesondere in einem dichten Abstand hintereinander in Reihe, so sind diese Produkte hinreichend stabil in einer Weise angeordnet, daß auch ein Querverfahren oder Querverschieben des Regalbediengeräts längs eines Produktlagerregals zumindest in einer Richtung mit großer Beschleunigung/Verzögerung von einer Lagerstelle zur anderen möglich ist, nämlich in der Richtung, in welcher die seitlich beschleunigten/verzögerten Produkte an den Längsanschlag gedrückt werden.

Die Produkte können nicht nur in einem dichten Abstand, sondern alternativ auch mit beliebigem konfigurierbaren Abstandsbereich zwischen den Produkten gespeichert bzw. befördert werden.

Ein weiterer Erfindungsaspekt ist, daß in vorteilhafte Weiterbildung der Erfindung das Endlosband einschließlich Längsanschlag in Querrichtung des Endlosbandes in eine Schwenkstellung gekippt werden kann, in der sich die Wurzel des Winkels zwischen Längsanschlag und Endlosband an tiefster Stelle befindet. Dadurch werden auf dem Endlosband befindliche unterschiedlich dimensionierte Produkte in einer Weise stabilisiert, daß eine Querbeschleunigung/Querverzögerung des Endlosbandes in beiden Richtungen möglich ist, und die Produkte in ihrem Zentrierwinkel hinreichend stabil gehalten werden.

Ein derart konzipiertes Regalbediengerät kann besonders schnell mit hoher Kommissionierleistung selbst bei großen, lang erstreckten Produktlagerregalen zuverlässig gehandhabt werden. Die Kippstellung des Endlosbandes einschließlich Längsanschlag ist nur bei einer Querbewegung des Regalbediengerätes eingestellt. Befindet sich das Regalbediengerät in einer Entnahmestellung in Ausrichtung zu einem Produktlagerregal oder in einer Abgabestellung bezüglich eines nachfolgenden Anschlußförderbandes, so ist die Kippstellung des Endlosbandes einschließlich Längsanschlag nicht eingestellt: Das Endlosband befindet sich - gesehen in Querrichtung des Endlosbandes - in einer horizontalen Lage, in welcher sich auch die Regalböden des Produktlagerregals oder das Anschlußförderband befinden.

Die Erfindung wird nachfolgend anhand eines Ausführungsbeispiels unter Bezugnahme auf die beigefügten Zeichnungen näher erläutert; es zeigen:
- Figur 1: ein erfindungsgemäßes Regalbediengerät ohne unterem Fahr- oder Verschiebewerk für ein Verfahren oder Verschieben längs eines Produktlagerregals in einer perspektivischen Ansicht,
- Figur 2: das Regalbediengerät nach Figur 1 in einer auseinander gezogenen Darstellung, bestehend aus einer Produkthandhabungseinheit und einer Sockeleinheit,
- Figur 3: die Produkthandhabungseinheit nach Figur 2 in einer weiter auseinander gezogenen Darstellung, bestehend aus einer Endlosband-Einheit, einer Kippeinheit, einer Trägereinheit, sowie einer Verbindungseinheit,
- Figuren 4 bis 12: Draufsicht und Stirnansicht der Produkthandhabungseinheit nach Figur 3 in verschiedenen Handhabungsstellungen des Regalbediengeräts.

Das Regalbediengerät 1 ist Teil einer Kommissioniervorrichtung für zu kommissionierende oder zu puffernde kubische Produkte und kann über eine zentrale Steuereinheit am Produktlagerregal 2 an gewünschter Stelle eines zu entnehmenden Produkts positioniert und auch die Produktentnahme über die zentrale Steuereinheit gesteuert werden. Die zentrale Steuereinheit steuert auch die einzelnen nachfolgend noch beschriebenen Antriebe des Regalbediengeräts 1.

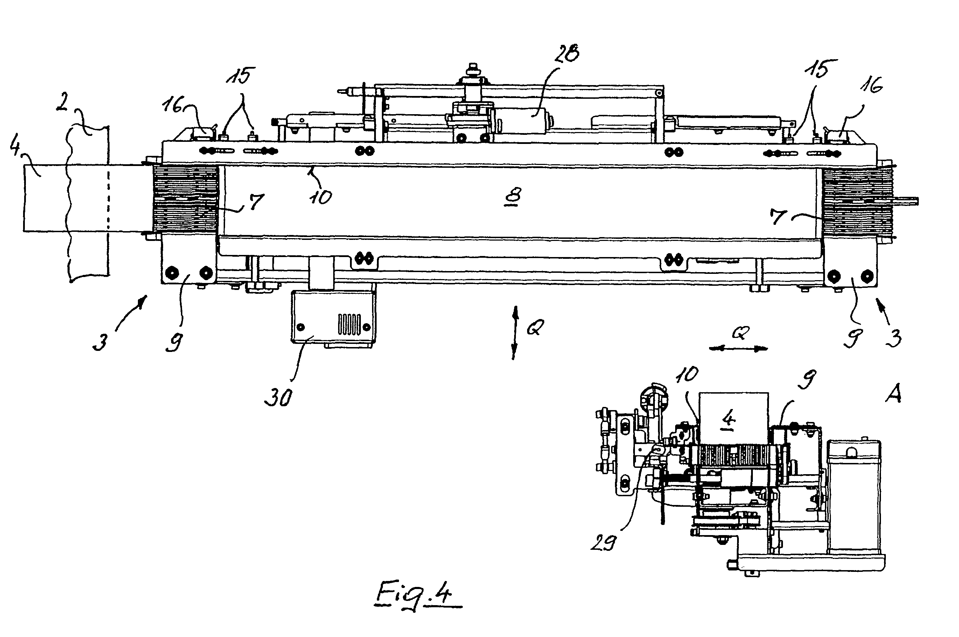

Das Produktlagerregal 2 weist schräge Regalböden auf, die dicht nebeneinander, eine Lagerebene ausbildend, und mit Abstand übereinander, mehrere Lagerebenen ausbildend, angeordnet sind. Das Produktlagerregal 2 ist in der Figur 4, links, schematisch gezeigt.

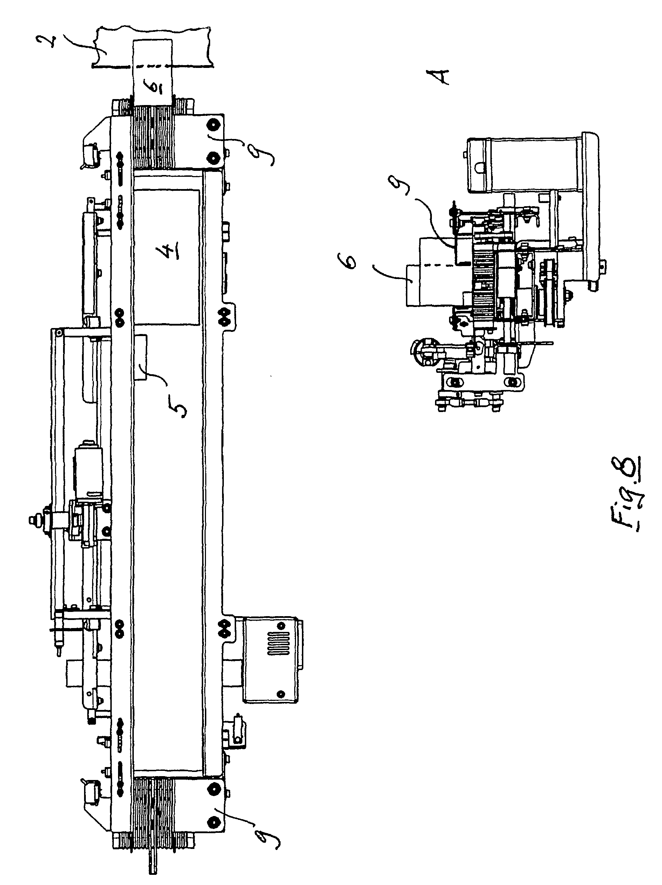

Ein weiteres Produktlagerregal 2 befindet sich auf der anderen Seite des Regalbediengeräts 1 gemäß Figur 8, rechts.

Beide Produktlagerregale 2 bilden eine Automatengasse, in der das Regalbediengerät 1 längsverschieblich oder längsverfahrbar ist, so daß es bei einzelnen ausgewählten Regalböden der Produktlagerregale 2 positioniert werden kann.

Das Regalbediengerät 1 ist bezüglich seiner Längserstreckung im wesentlichen symmetrisch aufgebaut, um beide voneinander beanstandete Produktlagerregale 2 gemäß Figur 4 und 8 mittels endseitiger Bedienfinger 7 bedienen zu können.

Die Bedienfinger 7 sind in der Längserstreckung kurz gehaltene angetriebene Umlaufbänder mit einem zentralen schmalen Umlaufband, welches länger ist als der Rest der angetriebenen Umlaufbänder und längsendseitig die am weitesten vorstehende Erstreckung des Regalbediengeräts bildet.

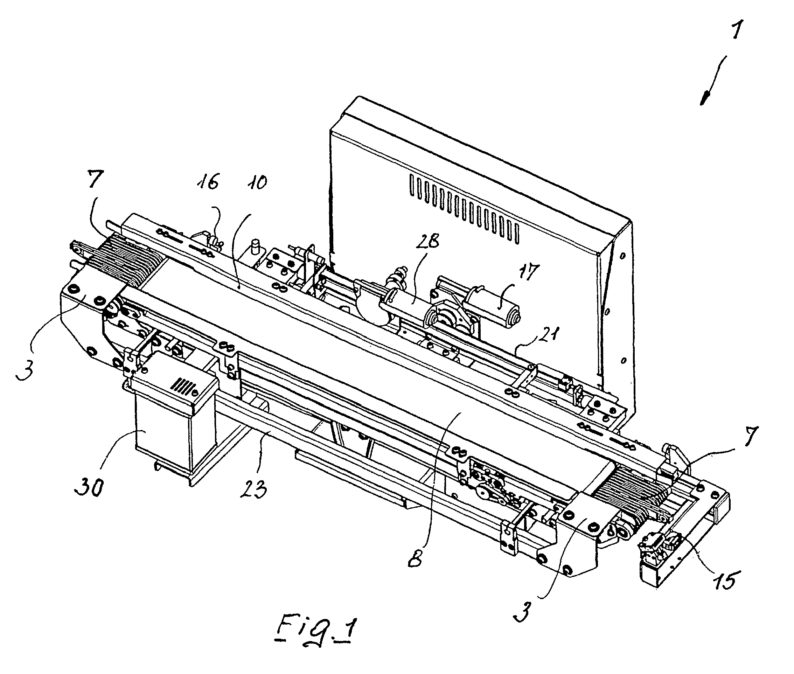

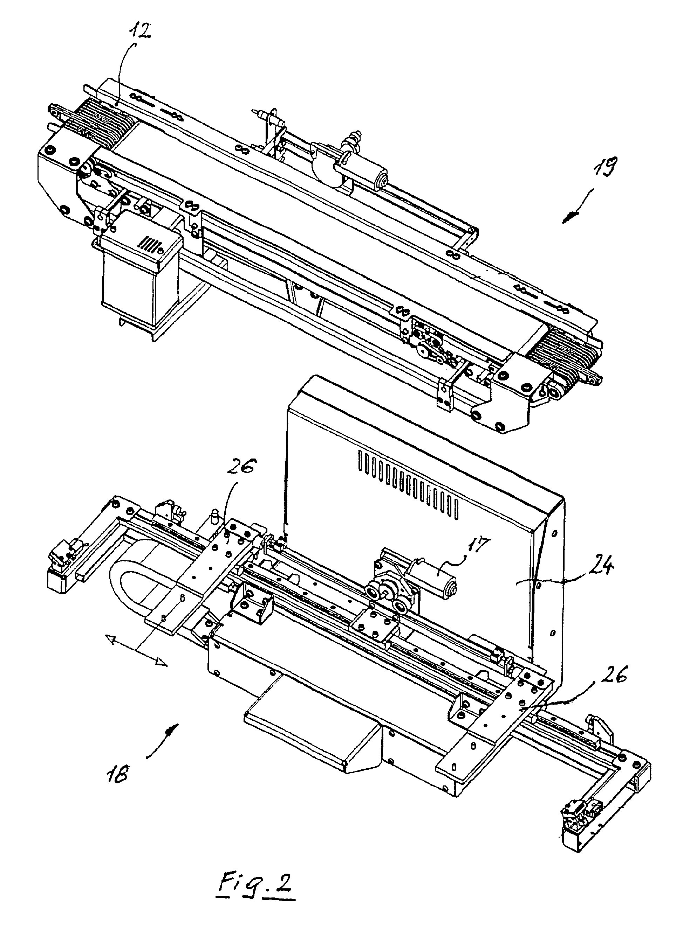

Das Regalbediengerät 1 gemäß Figur 1 setzt sich aus einer Produkthandhabungseinheit 19 und einer Sockeleinheit 18 gemäß Figur 2 zusammen.

Die Sockeleinheit 18 umfaßt unter anderem einen Rückenrahmen 24, einen Endlosband-Antrieb 17 sowie voneinander beanstandete Sockel 26, auf denen die Produkthandhabungseinheit 19 gemäß Figur 2, oben, positioniert befestigt werden kann.

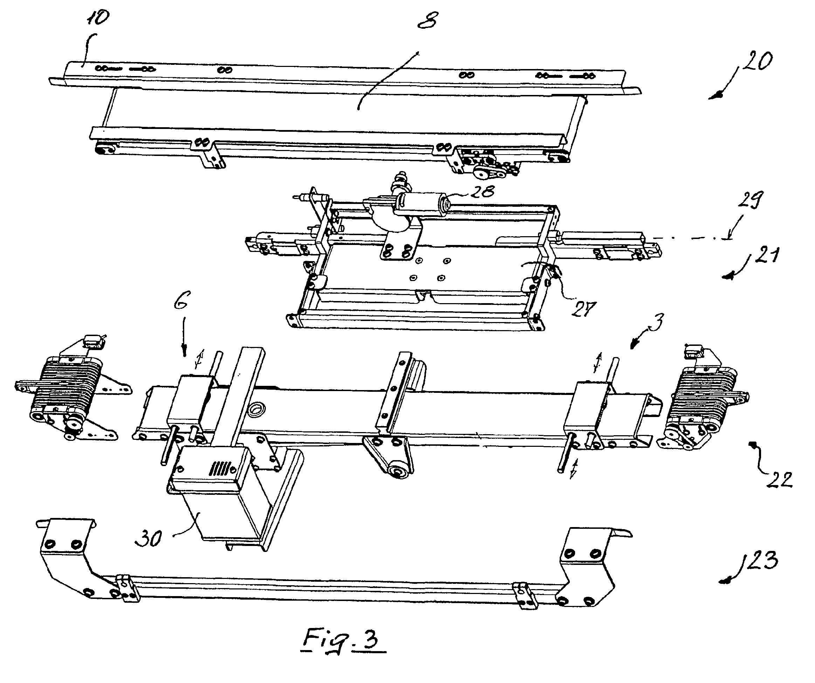

Die Produkthandhabungseinheit 19 besteht ihrerseits, wie dies in Figur 3 dargestellt ist, aus einer Endlosband-Einheit 20, einer Kippeinheit 21, einer Trägereinheit 22, sowie einer Verbindungseinheit 23.

Die Endlosband-Einheit 20 besitzt im wesentlichen ein über endseitige Umlenkrollen geführtes Endlosband 8, welches durch den Endlosband-Antrieb 17 in beiden Richtungen angetrieben werden kann, und einen Längsanschlag 10, welcher sich auf der in Figur 3 gezeigten hinteren Querseite des Endlosbandes nicht nur über die gesamte Länge des Endlosbandes 8 erstreckt, sondern auf beiden Längsenden des Endlosbandes 8 vorsteht, und die vordersten vertikalen Enden abgewinkelt sind.

Der Längsanschlag 10 kann ein vertikales planes Leitblech 12 oder ein Winkelblech sein.

Die Endlosband-Einheit 20 ist auf einem Schlittenblech 27 der Kippeinheit 21 befestigt.

Die Kippeinheit 21 enthält ferner einen Schwenkantrieb 28 und eine Schwenkachse 29, wie dies insbesondere in Figur 3 gezeigt ist. Die Kippeinheit 21 ist ihrerseits über das Schlittenblech 27 mit der Trägereinheit 22 über eine Führung verbunden, an deren Längsenden die beiden Bedienfinger 7 des Regalbediengerätes befestigt sind, welche über die Verbindungseinheit 23 miteinander verbunden sind.

Auf der Trägereinheit 22 befinden sich im Bereich der montierten Bedienfinger 7 an jedem Längsende eine Zentriervorrichtung 3 mit jeweils einem Produkt-Seitenzentrierer 9 in Form eines Zentriererbleches und einem Zentrier-Antrieb 30, wobei die Zentriererbleche miteinander fest verbunden sind. Das Zentriererblech weist zumindest eingangsseitig eine konische Erweiterung in Form eines schräg verlaufenden vertikalen Leitbleches auf, welches eine einwandfreies Einlaufen eines Produktes ermöglicht.

Ferner weist das Regalbediengerät 1 im Bereich einer jeden Zentriervorrichtung 3 eine Zählvorrichtung 16 in Form einer Zähllichtschranke sowie im Bereich eines jeden Längsendes des Endlosbandes 8 zumindest eine Referenzlichtschranke 15 auf.

Referenzlichtschranken 15 und Zählvorrichtungen 16 sind mit der zentralen Steuereinheit verbunden, welche sämtliche vorgenannten Antriebe, wie auch die Bedienfinger 7, synchron ansteuert.

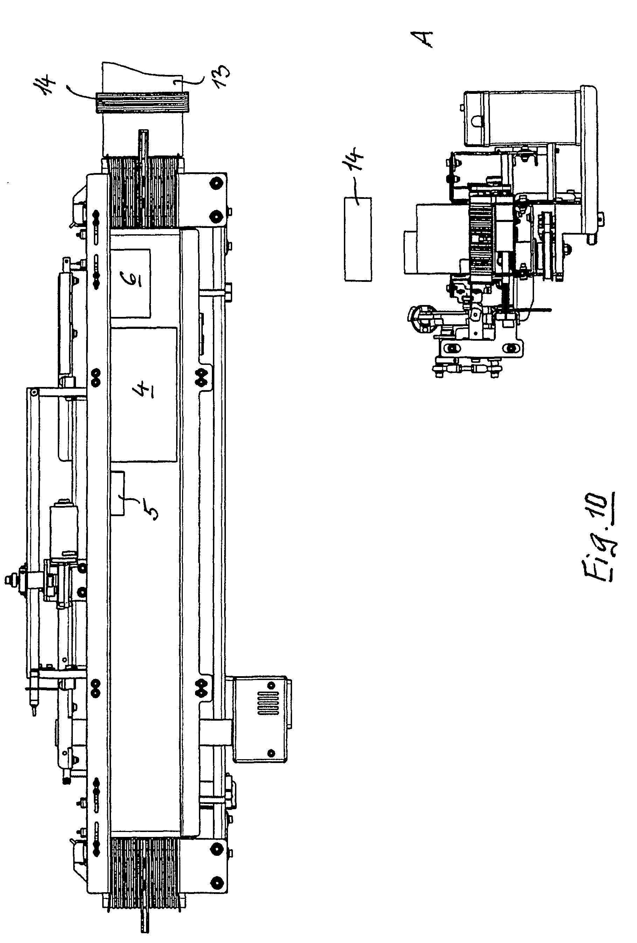

Nachfolgend wird die Funktionsweise des Regalbediengeräts 1 anhand der Figuren 4 bis 12 beschrieben.

Gemäß Figur 4 wird das Regalbediengerät 1 gemäß den Figuren 1 bis 3 in einer Entnahmestellung eines schrägen Regalbodens eines linken Produktlagerregals 2 positioniert. Mit Hilfe des linken Bedienfingers 7 wird der dortige Regalanschlag des ausgewählten Regalbodens untergriffen, und das ausgewählte zu kommissionierende Produkt 4 über den Regalanschlag gehoben und über einen angetriebenen Verlängerungsbandabschnitt dem in der horizontalen Ausgangsstellung A befindlichen Endlosband 8 des Regalbediengeräts 1 zugeführt. Hierbei wird das ausgewählte Produkt 4 über die Zählvorrichtung 16 gezählt und gleichzeitig durch die Zentriervorrichtung 3 dadurch zentriert, daß deren Zentriererblech zuerst durch den betätigten Zentrier-Antrieb 30 auf das ausgewählte Produkt 4 entsprechend seiner Breite eingestellt und dann durch Vorwärtsbewegung des angetriebenen Verlängerungsbandabschnittes und des synchron angetriebenen Endlosbandes das darauf bewegte Produkt durch das Leitblech bzw. Zentriererblech beim seitlichen Längsanschlag angeordnet bzw. seitlich zentriert wird.

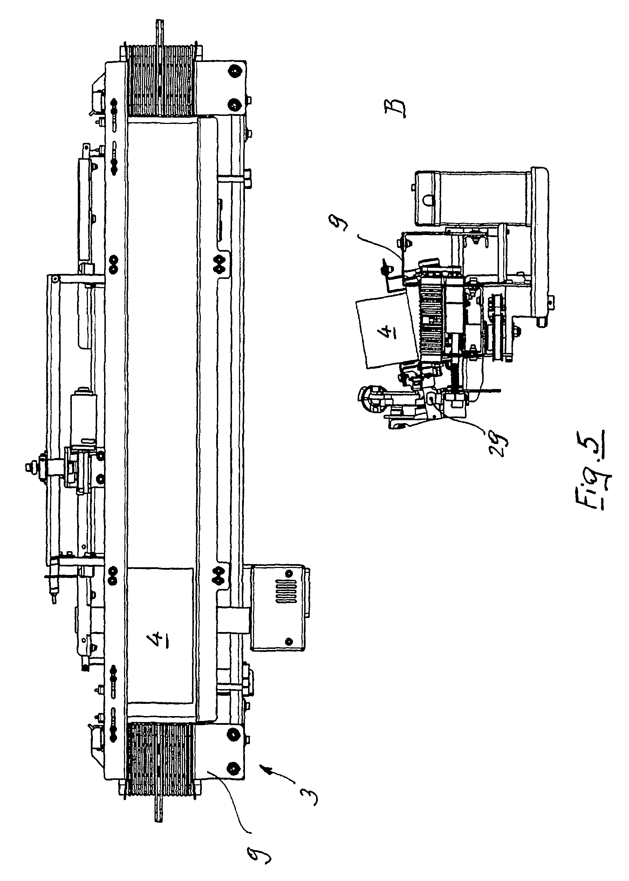

Das ausgewählte Produkt 4 wird von den Referenzlichtschranken 15 gemäß Figur 4, links, registriert, und, wie vorgenannt, entsprechend das Endlosband 8 durch den Endlosband-Antrieb 17 in Betrieb genommen, so daß das Produkt 4 in die in Figur 5 gezeigte Stellung auf dem Endlosband 8 gefördert wird, und dann das Endlosband 18 angehalten wird.

Anschließend wird das Endlosband 8 einschließlich Längsanschlag 10 mittels der Kippeinheit 21 durch Betätigen des Schwenkantriebs 28 aus der in Figur 4 gezeigten horizontalen Ausgangsstellung A in eine gekippte Schrägstellung B gemäß Figur 5, rechts, in einer Weise gekippt, daß sich die Wurzel 11 des Winkels zwischen dem Längsanschlag 10 und dem Endlosband 8 an tiefster Stelle befindet. Auf diese Weise ist das ausgewählte Produkt 4 auf dem Endlosband 8 nicht nur zentriert, sondern auch stabil in der Winkelwurzel gehalten.

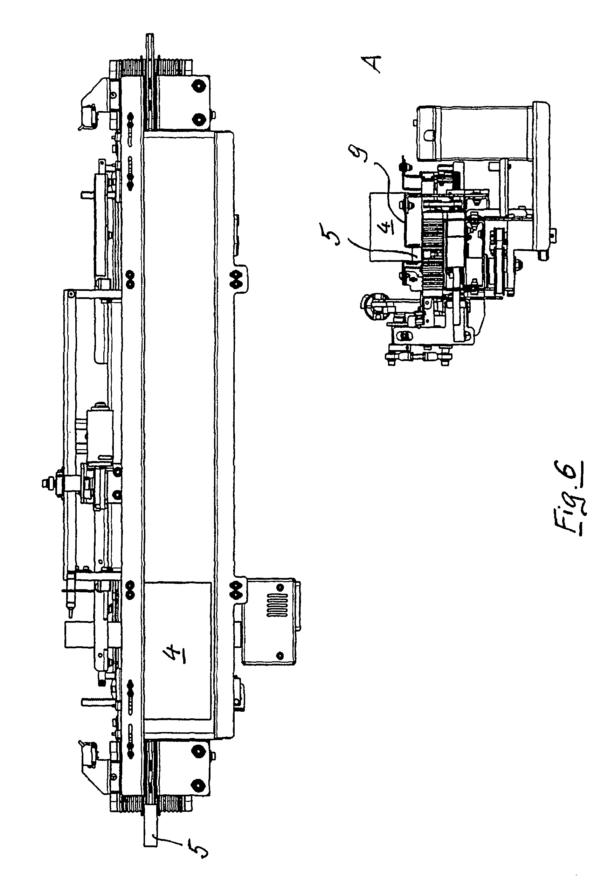

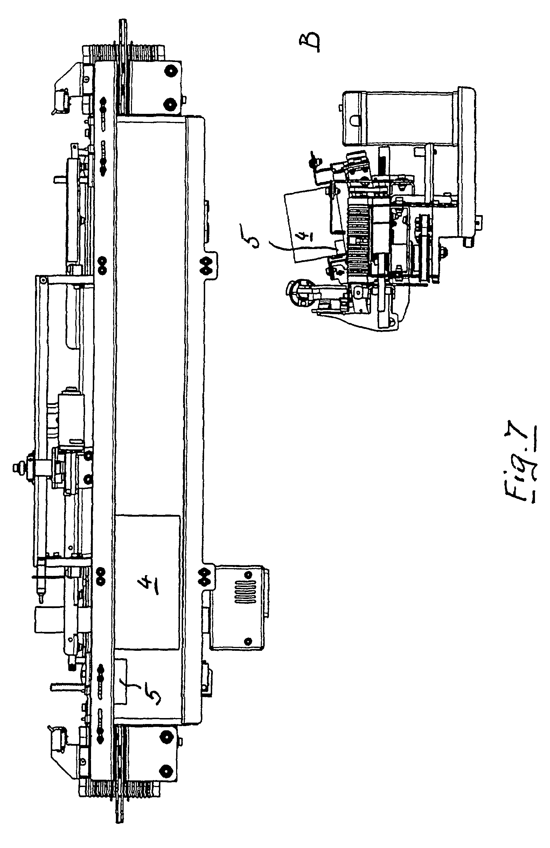

Daraufhin wird das Regalbediengerät 1 in der in Figur 5 gezeigten Schwenkstellung B des Endlosbandes 8 in der Automatengasse zwischen den beiden Produktregallagern 1 in Querrichtung Q des Endlosbandes 8 in eine weitere Entnahmestellung eines anders konfigurierten kubischen Produkts 5 des Produktlagerregals 2, links, gebracht, und dort gemäß Figur 6 in die horizontale Ausgangsstellung A wieder zurückgekippt. Dann wird das anders konfigurierte kubische Produkt 5 in gleicher Weise wie das Produkt 4 seitlich zentriert und auf das Endlosband 8 eingebracht und insbesondere in dichtem Abstand zum Produkt 4 positioniert. Daraufhin werden beide Produkte 4 und 5 gemäß Figur 7, rechts, wieder in die Schwenkstellung B gebracht, um das Regalbediengerät 1 mit vergleichsweise großer Querbeschleunigung bei einem weiteren Produktlagerregal 2 gemäß Figur 8, rechts, zu positionieren.

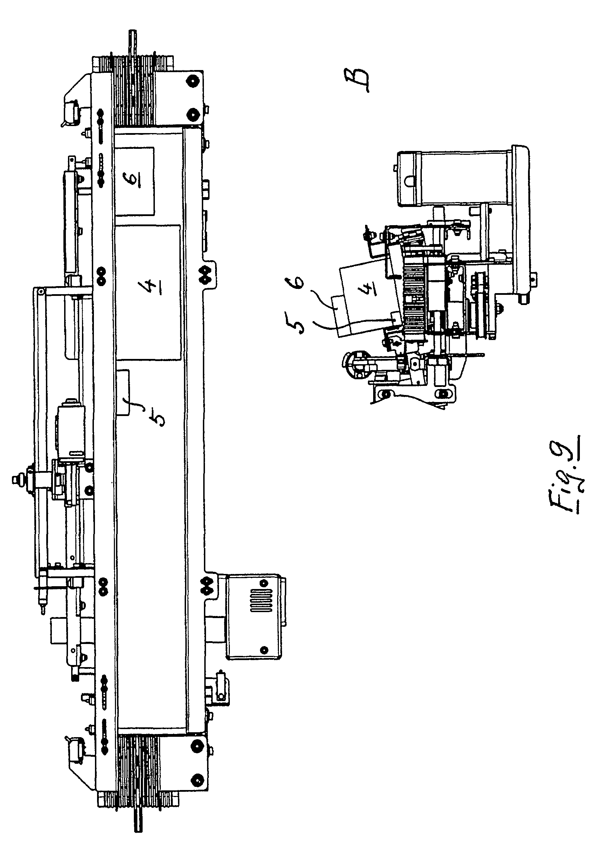

Vor einem Einbringen des weiteren Produkts 6 gemäß Figur 8 wird wieder die horizontale Ausgangsstellung A gemäß Figur 8, rechts, eingestellt, und anschließend gemäß Figur 9 letztgenanntes Produkt 6 rechts in dichtem Abstand vom ersten Produkt 4 seitlich zentriert auf dem Endlosband 8 angeordnet. Es versteht sich, daß zuvor die Produkte 4 und 5 aus der in Figur 7 der gezeigten Stellung in die in Figur 8 gezeigte Stellung nach rechts auf dem Endlosband 8 verfahren werden.

Im Anschluß hieran werden sämtliche drei auf dem Endlosband 8 befindlichen Produkte 4, 5 und 6 abermals gemäß Figur 9, rechts, in der Schwenkstellung B zentriert, und gegebenenfalls weiteren Entnahmestellen der Produktlagerregale 2 zugeführt.

Der Vorgang wiederholt sich solange, bis das Endlosband 8 vollständig gefüllt oder der Kommissionierauftrag abgeschlossen ist.

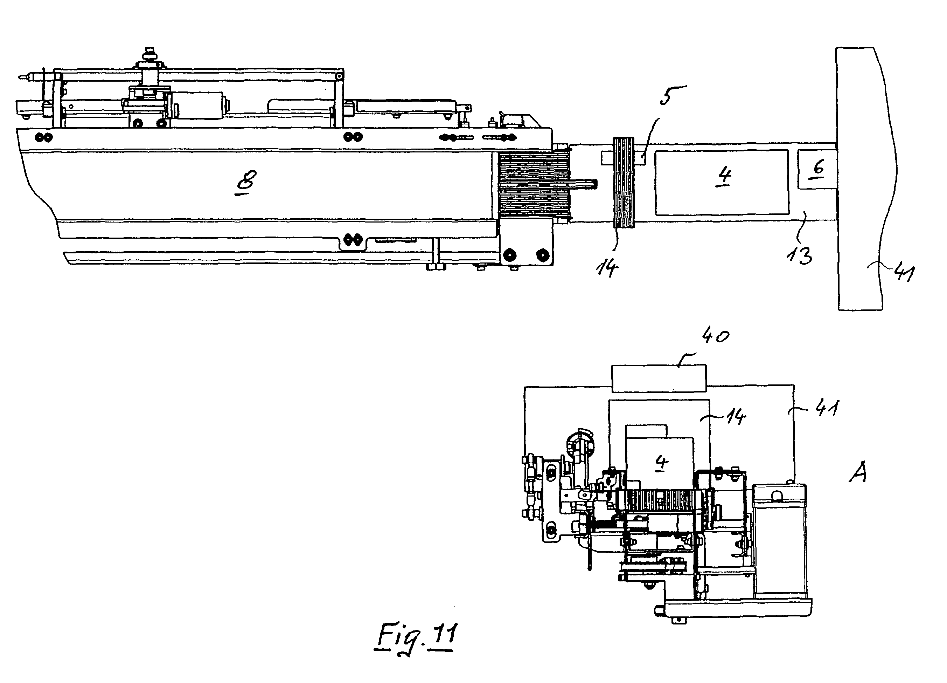

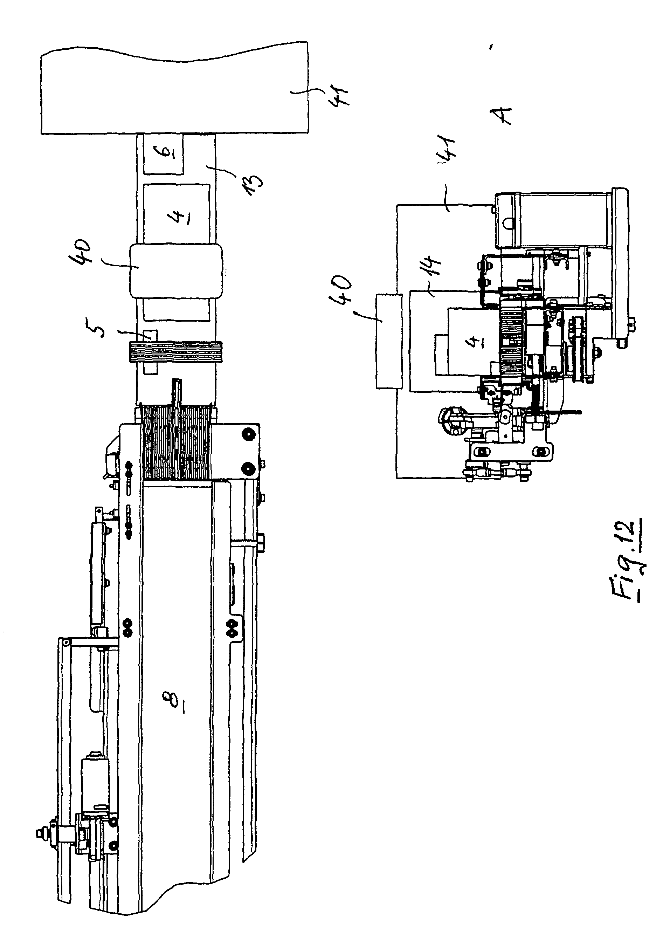

Schließlich werden die Produkte 4, 5 und 6 aus der Schwenkstellung B auf ein Anschlußförderband 13 in der horizontalen Ausgangsstellung A gemäß den Figuren 11 und 12 vom Endlosband 8 exakt positioniert vorzugsweise in dichtem Abstand gefördert, wobei jedes Produkt 4, 5 und 6 von einer Produkt-Erkennungseinrichtung 14 in Form eines Scanners identifiziert wird, der sich über dem Eingangsbereich des Anschlußförderbandes 13 befindet, sowie von einer Bildverarbeitungseinrichtung 40 gemäß Figur 12 erfaßt, mit welcher eine visuelle Erfassung des Produkt-Istzustandes und gegebenenfalls eine Rückverfolgung in Bezug auf das Produkt ermöglicht wird. Die visuelle Erfassung kann auch für eine Dokumentation bzw. Rückverfolgbarkeit bezüglich der ausgelieferten bzw. verpackten Produkte verwendet werden.

Anschließend werden die Produkte einer Verpackungsstation 41 zugeführt, in welcher die kommissionierten Produkte verpackt und von dort abtransportiert werden.

Während gemäß Figur 12 sich die Bildverarbeitungseinrichtung 40 im Bereich des Anschlußförderbandes 13 hinter der Produkt-Erkennungseinrichtung 14 über dem Anschlußförderband 13 in einem Abstand befindet, daß auch vergleichsweise hohe kubische Produkte berührungsfrei abförderbar sind, befindet sich gemäß Figur 11 die Bildverarbeitungseinrichtung 40 in einem entsprechend hoch gelagerten Bereich in der Verpackungsstation 41.

Ersichtlich werden durch die Erfindung unterschiedlich konfigurierte Produkte ohne die Möglichkeit eines seitlichen Umkippens durch das Regalbediengerät 1 schnell und zuverlässig gehandhabt. Besitzen die Produkte 4, 5 und 6 auf ihrer Oberseite beispielsweise Identifikationsmerkmale in Form von Barcodes, so werden diese vom Scanner gemäß Figur 11 einwandfrei erfaßt, da die Produkte nicht umkippen können.

Es versteht sich, daß die Produkte vom Endlosband 8 auch anderweitig abgefördert werden können, beispielsweise in einen Sammelbehälter.

## Patentansprüche

1. Regalbediengerät (1) zum Bedienen eines Produktlagerregals (2), welches zumindest einen Regalboden aufweist, auf dem im wesentlichen kubische Produkte (4, 5, 6) angeordnet, gehalten, entnehmbar und einem angetriebenen, im wesentlichen horizontalen Endlosband (8) des höhenverstellbaren und längs des Produktlagerregals beweglichen Regalbediengeräts zuführbar sind, wobei die entnommenen Produkte durch eine Zentriervorrichtung zentriert werden,
**dadurch gekennzeichnet,**
**daß** die Zentriervorrichtung (3) einen auf einer Querseite des Endlosbandes (8) im Bereich zumindest eines Längsendes des Endlosbandes angeordneten Produkt-Seitenzentrierer (9), vorzugsweise ein Zentriererblech, umfaßt, welcher bzw. welches ein aus dem Produktlagerregal (2) entnommenes Produkt im Verlauf seiner Vorwärtsbewegung gegen einen seitlichen Längsanschlag (10) des Endlosbandes (8) zentriert, der sich auf der dem Produkt-Seitenzentrierer (9) entgegengesetzten Querseite des Endlosbandes erstreckt.

2. Regalbediengerät nach Anspruch 1,
**dadurch gekennzeichnet,**
**daß** der Längsanschlag (10) mit dem Endlosband (8) einen rechten Winkel bildet.

3. Regalbediengerät nach Anspruch 1 oder 2,
**dadurch gekennzeichnet,**
**daß** das Endlosband (8) einschließlich Längsanschlag (10) in Querrichtung des Endlosbandes in eine Schwenkstellung (B) kippbar ist, in der sich die Wurzel (11) des Winkels zwischen Längsanschlag und Endlosband an tiefster Stelle befindet.

4. Regalbediengerät nach einem der Ansprüche 1 bis 3,
**dadurch gekennzeichnet,**
**daß** der Längsanschlag ein planes Leitblech (12) oder ein Winkelblech ist.

5. Regalbediengerät nach einem der Ansprüche 1 bis 3,
**dadurch gekennzeichnet,**
**daß** der Längsanschlag aus leerlaufenden Rollen zusammengesetzt ist.

6. Regalbediengerät nach einem der Ansprüche 1 bis 3,
**dadurch gekennzeichnet,**
**daß** der Längsanschlag ein synchron mit dem Endlosband angetriebenes Umlaufband ist.

7. Regalbediengerät nach einem der Ansprüche 1 bis 6,
**dadurch gekennzeichnet,**
**daß** dem Endlosband (8) oder einem nachfolgenden Anschlußförderband (13) vorzugsweise oberseitig eine stationäre Produkt-Erkennungseinrichtung (14), insbesondere ein Scanner, zugeordnet ist, welche bzw. welcher die auf dem Endlosband bzw. dem Anschlußförderband laufenden Produkte identifiziert, insbesondere Barcodes auf der Oberseite der Produkte einscannt.

8. Regalbediengerät nach einem der Ansprüche 1 bis 7,
**dadurch gekennzeichnet, daß** dem Endlosband oder einem nachfolgenden Anschlußförderband vorzugsweise oberseitig eine Bildverarbeitungseinrichtung (40) zugeordnet ist, durch welche die auf dem Endlosband bzw. Anschlußförderband laufenden Produkte visuell erfaßt und vorzugsweise dokumentiert werden.

9. Regalbediengerät nach einem der Ansprüche 1 bis 8,
**dadurch gekennzeichnet,**
**daß** dem Endlosband oder einem nachfolgenden Anschlußförderband eine Verpackungsstation (41) nachgeordnet ist.

10. Regalbediengerät nach einem der Ansprüche 1 bis 9,
**dadurch gekennzeichnet,**
**daß** im Bereich eines jeden Längsendes des Endlosbandes (8) zumindest eine Referenzlichtschranke (15) zur Steuerung des Endlosbandes (8) vorgesehen ist.

11. Regalbediengerät nach einem der Ansprüche 1 bis 10,
**dadurch gekennzeichnet,**
**daß** das Endlosband (8) durch einen Endlosband-Antrieb (17) in beiden Richtungen antreibbar ist.

12. Verfahren zum Entnehmen von Produkten aus einem Produktlagerregal (2) mit Hilfe eines Regalbediengeräts (1) nach einem der Ansprüche 1 bis 11, wobei das Produktlagerregal zumindest einen schrägen Regalboden aufweist, auf dem im wesentlichen kubische Produkte (4, 5, 6) hintereinander angeordnet und gegen einen Regalanschlag an tiefster Stelle des schrägen Regalbodens gehalten sind, und ein Bedienfinger (7) des höhenverstellbaren und längs des Produktlagerregals beweglichen Regalbediengeräts (1) das am Regalanschlag anliegende unterste Produkt der auf dem schrägen Regalboden hintereinander angeordneten Produkte untergreifen, über den Regalanschlag anheben und nach einem Zentrieren durch eine Zentriervorrichtung (3) einem horizontalen, über endseitige Umlenkrollen geführten, angetriebenen Endlosband (8) des Regalbediengeräts zentriert übergeben kann,
**dadurch gekennzeichnet,**
**daß** ein aus dem Produktlagerregal (2) mittels des Bedienfingers (7) entnommenes Produkt durch Bewegung des angetriebenen Endlosbandes (8) einschließlich eines gegebenenfalls vorgelagerten Verlängerungsbandabschnittes, nach einem Einstellen eines Produkt-Seitenzentrierers (9), vorzugsweise eines Zentriererbleches, auf die Produktbreite in Querrichtung (Q) des Endlosbandes in Richtung Längsanschlag (10), gegen den seitlichen Längsanschlag (10) seitlich zentriert wird.

13. Verfahren nach Anspruch 12,
**dadurch gekennzeichnet,**
**daß** die aus dem Produktlagerregal (2) mittels des Bedienfingers (7) entnommenen Produkte durch eine Zählvorrichtung (16), insbesondere eine Zähllichtschranke, gezählt werden.

14. Verfahren nach Anspruch 12 oder 13,
**dadurch gekennzeichnet,**
**daß** das Endlosband (8) an seinen Längsenden jeweils durch eine Referenzlichtschranke (15) gesteuert wird.

15. Verfahren nach einem der Ansprüche 12 bis 14,
**dadurch gekennzeichnet,**
**daß** die aus dem Produktlagerregal (2) entnommenes Produkte auf das Endlosband (8) in vorzugsweise dichtem Abstand gefördert werden.

16. Verfahren nach einem der Ansprüche 12 bis 15,
**dadurch gekennzeichnet,**
**daß** nach einem Fördern zumindest eines Produktes auf das Endlosband das Endlosband (8) in Querrichtung (Q) in eine Schwenkstellung (B) gekippt wird.

17. Verfahren nach Anspruch 16,
**dadurch gekennzeichnet,**
**daß** das gekippte Endlosband (8) längs des Produktlagerregals (2) in Querrichtung (Q) beschleunigt verfahren oder verschoben wird.

18. Verfahren nach Anspruch 17,
**dadurch gekennzeichnet,**
**daß** das gekippte, längs des Produktlagerregals (2) verfahrene oder verschobene Endlosband (8) für eine Aufnahme eines weiteren Produktes oder eine Abgabe bereits aufgenommener Produkte in seine horizontale Ausgangslage (A) zurückgekippt wird.

19. Verfahren nach einem der Ansprüche 12 bis 18,
**dadurch gekennzeichnet,**
**daß** auf dem Endlosband (8) befindliche Produkte einem ausgerichteten Anschlußförderband (13) abgegeben werden.

20. Verfahren nach Anspruch 19,
**dadurch gekennzeichnet,**
**daß** die auf das Anschlußförderband (13) abgegebenen Produkte durch eine Produkt-Erkennungseinrichtung (14), insbesondere durch einen Scanner, identifiziert werden.

21. Verfahren nach Anspruch 19 oder 20,
**dadurch gekennzeichnet,**
**daß** die auf das Anschlußförderband (13) abgegebenen Produkte durch eine Bildverarbeitungseinrichtung (40) visuell erfaßt und vorzugsweise dokumentiert werden.

22. Verfahren nach einem der Ansprüche 19 bis 21,
**dadurch gekennzeichnet,**
**daß** die vom Anschlußförderband abgegebenen Produkte in einer Verpackungsstation (41) verpackt werden.

## Claims

1. storage and retrieval unit (1) for operating a said product storage shelving (2), which has at least one shelf, on which said, essentially cubic products (4, 5, 6) are arranged and held and from which said products can be removed and fed to a said driven, essentially horizontal continuous belt (8) of the height-adjustable storage and retrieval unit that is movable along the product storage shelving, wherein the products removed are centered by a centering device,
**characterized in that**
the said centering device (3) comprises a said lateral product centering element (9), preferably a centering plate, which is arranged on a transverse side of the said continuous belt (8) in the area of at least one longitudinal end of the said continuous belt, which said lateral product centering element or which said centering plate centers a said product removed from the said product storage shelving (2) in the course of its forward movement against a said lateral longitudinal stop (10) of the said continuous belt (8), which said longitudinal stop extends on the transverse side of the said continuous belt, and which said transverse side is located opposite the said lateral product centering element (9).

2. Storage and retrieval unit in accordance with claim 1,
**characterized in that**
the said longitudinal stop (10) with the said continuous belt (8) forms a right angle.

3. Storage and retrieval unit in accordance with claim 1 or 2,
**characterized in that**
the said continuous belt (8) including the said longitudinal stop (10) can be tilted in the transverse direction of the said continuous belt into a said pivoted position (B), in which the said root (11) of the angle between the said longitudinal stop and the said continuous belt is located at the deepest point.

4. Storage and retrieval unit in accordance with one of the claims 1 through 3,
**characterized in that**
the said longitudinal stop is a said flat guide plate (12) or an angle plate.

5. Storage and retrieval unit in accordance with one of the claims 1 through 3,
**characterized in that**
the said longitudinal stop is composed or idling rollers.

6. Storage and retrieval unit in accordance with one of the claims 1 through 3,
**characterized in that**
the said longitudinal stop is a circulating belt driven synchronously with the said continuous belt.

7. Storage and retrieval unit in accordance with one of the claims 1 through 6,
**characterized in that**
a said stationary product recognition means (14), especially a scanner, which said product recognition means or scanner identifies the products moving on the continuous belt or on the joining conveyor belt and especially cans bar codes on the top side of the said products, is associated with the said continuous belt (8) or a said downstream joining conveyor belt (13), preferably on the top side.

8. Storage and retrieval unit in accordance with one of the claims 1 through 7,
**characterized in that**
a said image processing means (40), by which the products moving on the said continuous belt or on the said joining conveyor belt are visually detected and preferably documented, is associated with the said continuous belt or a said downstream joining conveyor belt, preferably on the top side.

9. Storage and retrieval unit in accordance with one of the claims 1 through 8,
**characterized in that**
a said packaging station (41) is arranged downstream of the said continuous belt or the said downstream joining conveyor belt.

10. Storage and retrieval unit in accordance with one of the claims 1 through 9,
**characterized in that**
at least one said reference photocell (15) for controlling the said continuous belt (8) is provided in the area of each said longitudinal end of the said continuous belt (8).

11. Storage and retrieval unit in accordance with one of the claims 1 through 10,
**characterized in that**
the said continuous belt (8) can be driven by a said continuous belt drive (17) in both directions .

12. Method for removing products from a said product storage shelving (2) by means of a said storage and retrieval unit (1) in accordance with one of the claims 1 through 11, wherein the said product storage shelving has at least one said oblique shelf, on which said, essentially cubic products (4, 5, 6) are arranged one after another and are held against a said shelf stop at the deepest point of the said oblique shelf, and a said operating finger (7) of the said height-adjustable storage and retrieval unit (1), which said storage and retrieval unit is movable along the said product storage shelving, can extend under the lowermost product of the products arranged one after another at the said shelf stop, lift same over the said shelf stop and transfer same in a centered manner after centering by a said centering device (3) to a said horizontal, driven continuous belt (8) of the said storage and retrieval unit, which said continuous belt is guided via end-side defecting rollers,
**characterized in that**
a said product removed from the said product storage shelving (2) by means of the said operating finger (7) is laterally centered against the said lateral longitudinal stop (10) by moving the said driven continuous belt (8) including a said extension belt section optionally arranged upstream after setting a said lateral product centering element (9), preferably a said centering plate, to the product width in the said transverse direction (Q) of the said continuous belt in the direction of the said longitudinal stop (10).

13. Method in accordance with claim 12,
**characterized in that**
the said products removed from the said product storage shelving (2) by means of the said operating finger (7) are counted by a said counting device (16), especially a counting photocell.

14. Method in accordance with claim 12 or 13,
**characterized in that**
the said continuous belt (8) is controlled at its longitudinal ends by a said reference photocell (15) each.

15. Method in accordance with one of the claims 12 through 14,
**characterized in that**
the said products removed from the said product storage shelving (2) are delivered onto the said continuous belt (8), preferably at closely spaced locations.

16. Method in accordance with one of the claims 12 through 15,
**characterized in that**
after the delivery of at least one said product onto the said continuous belt, the said continuous belt (8) is tilted in the said transverse direction (Q) into a said pivoted position (B).

17. Method in accordance with claim 16,
**characterized in that**
the said tilted continuous belt (8) is transferred or pushed along the said product storage shelving (2) in the transverse direction (Q) in an accelerated manner.

18. Method in accordance with claim 17,
**characterized in that**
the said tilted continuous belt (8), transferred or pushed along the said product storage shelving (2), is tilted back into its said horizontal starting position (A) for picking up another product or for releasing products already picked up.

19. Method in accordance with one of the claims 12 through 18,
**characterized in that**
the said products located on the said continuous belt (8) are released to a said aligned joining conveyor belt (13).

20. Method in accordance with claim 19,
**characterized in that**
the said products released onto the said joining conveyor belt (13) are identified by a said product recognition means (14), especially by a scanner.

21. Method in accordance with claim 19 or 20,
**characterized in that**
the said products released onto the said joining conveyor belt (13) are visually detected and preferably documented by a said image processing means (40).

22. Method in accordance with one of the claims 19 through 21,
**characterized in that**
the said products released by the said joining conveyor belt are packaged in a said packaging station (41).

## Revendications

1. Dispositif de desserte pour une étagère (1), destiné à desservir une étagère de desserte de produits (2) comportant au moins un fond d'étagère sur lequel on a disposé, maintenu des produits cubiques susceptibles d'être retirés et susceptibles d'être amenés vers une bande sans fin (8) entraînable, essentiellement horizontale du dispositif de desserte de produits réglable en hauteur et susceptible d'être déplacée le long de l'étagère de stockage de produits, les produits enlevés étant centrés au moyen d'un dispositif de centrage,
**caractérisé en ce que** le dispositif de centrage de produits (3) comporte un dispositif de centrage latéral (9), de préférence une tôle de centrage, disposé sur un côté latéral de la bande sans fin (8) dans la zone d'au moins une extrémité latérale de la bande sans fin, lequel dispositif centre, au cours de son avancement, un produit enlevé de l'étagère de stockage de produits (2) contre une butée longitudinale (10) latérale de la bande sans fin (8, laquelle butée s'étend sur le côté transversal de la bande sans fin opposé au dispositif de centrage latéral de produits (9).

2. Dispositif de desserte d'étagères selon la revendication 1,
**caractérisé en ce que** la butée longitudinale (10) forme un angle droit avec la bande de transport sans fin.

3. Dispositif de desserte d'étagères selon la revendication 1 ou 2,
**caractérisé en ce que** la bande sans fin (8) est susceptible d'être basculée vers une position de pivotement (B) - la butée longitudinale(10) comprise - en direction transversale de la bande sans fin, dans laquelle position se trouve la racine (11) de l'angle entre la butée longitudinale et la bande sans fin à l'endroit le plus bas.

4. Dispositif de desserte d'étagères selon une des revendications 1 à 3,
**caractérisé en ce que** la butée longitudinale est une tôle de guidage (12) ou une plaque d'angle.

5. Dispositif de desserte d'étagères selon une des revendications 1 à 3,
**caractérisé en ce que** la butée longitudinale est composée de rouleaux tournant à vide.

6. Dispositif de desserte d'étagères selon une des revendications 1 à 3,
**caractérisé en ce que** la butée longitudinale est une bande circulante entraînée de façon synchrone avec la bande sans fin.

7. Dispositif de desserte d'étagères selon une des revendications 1 à 6,
**caractérisé en ce qu'**on associé à la bande sans fin (8) ou à une bande de transport de raccordement suivante (13), de préférence du côté supérieur, un dispositif stationnaire de reconnaissance de produits (14), notamment un scanner, qui identifie et scanne, notamment des codes barre, sur le côté supérieur des produits se déplaçant sur la bande sans fin, respectivement sur la bande de transport de raccordement.

8. Dispositif de desserte d'étagères selon une des revendications 1 à 7,
**caractérisé en ce qu'**on associe à la bande sans fin (8) ou à une bande de transport de raccordement suivante (13), de préférence du côté supérieur, un dispositif de traitement d'image (40) qui détecte visuellement et documente, de préférence des produits se déplaçant sur la bande sans fin, respectivement sur la bande de transport de raccordement.

9. Dispositif de desserte d'étagères selon une des revendications 1 à 8,
**caractérisé en ce qu'**un poste d'emballage (41) est positionné en aval de la bande sans fin ou d'une bande de transport de raccordement suivante.

10. Dispositif de desserte d'étagères selon une des revendications 1 à 9,
**caractérisé en ce que** l'on a prévu dans la zone de chaque extrémité longitudinale de la bande sans fin (8) au moins une barrière photoélectrique (15) de référence pour commander la bande sans fin (8).

11. Dispositif de desserte d'étagères selon une des revendications 1 à 10,
**caractérisé en ce que** la bande sans fin (8) est susceptible d'être entraînée dans deux directions par un entraînement (17) de bande sans fin.

12. Procédé pour enlever des produits d'une étagère de stockage (2) au moyen d'un dispositif de desserte d'étagères (1) selon une des revendication 1 à 11, où l'étagère de stockage de produits comporte au moins un fond d'étagère incliné, sur lequel sont disposés l'un derrière l'autre des produits (4, 5, 6) essentiellement cubiques, lesquels produits sont maintenus contre une butée d'étagère à l'endroit le plus en bas du fond d'étagère incliné, et où un doigt de desserte (7) du dispositif de desserte (1) d'étagères, réglable en hauteur et mobile le long de l'étagère de desserte de produits peut saisir par en dessous le produit le plus en bas butant contre la butée d'étagère des produits disposés l'un derrière l'autre sur le fond d'étagère incliné, levant ledit produit au dessus de la butée d'étagère et transférant de façon centrée ledit produit après un centrage par un dispositif de centrage (3) vers une bande sans fin (8) du dispositif de desserte d'étagères horizontale entraînée et guidée par des rouleaux de déviation du côté terminal,
**caractérisé en ce qu'**un produit prélevé au moyen d'un doigt de desserte (7) de l'étagère de stockage de produits (2) est centré latéralement contre la butée longitudinale (10) latérale par le mouvement de la bande sans fin (8) entraînée - une section de bande de prolongement positionnée éventuellement en amont étant comprise - après avoir ajusté un dispositif de réglage latéral de produits (9), de préférence une tôle de centrage, à la largeur du produit en direction transversale (Q) de la bande sans fin en direction longitudinale (10).

13. Procédé selon la revendication 12,
**caractérisé en ce que** les produits prélevés sont comptés au moyen d'un doigt de desserte (7) de l'étagère de stockage de produits (2) au moyen d'un dispositif de comptage (16), notamment une barrière photoélectrique de comptage.

14. Procédé selon la revendication 12 ou 13,
**caractérisé en ce que** la bande sans fin (8) est commandée à l'endroit de ses extrémités longitudinales, à chaque fois au moyen d'une barrière photoélectrique de comptage (15).

15. Procédé selon une des revendications 12 à 14,
**caractérisé en ce que** les produits prélevés de l'étagère de stockage de produits (2) sont transportés sur la bande sans fin (8) sur une distance, de préférence courte.

16. Procédé selon une des revendications 12 à 15,
**caractérisé en ce qu'**après le transport d'au moins un produit sur la bande sans fin, la bande sans fin (8) est basculée en direction transversale (Q) vers une position de pivotement (B).

17. Procédé selon la revendication 16,
**caractérisé en ce que** la bande sans fin basculée (8) est déplacée de façon accélérée le long de l'étagère de stockage de produits (2) en direction transversale.

18. Procédé selon la revendication 17,
**caractérisé en ce que** la bande sans fin (8) basculée, déplacée le long de l'étagère de stockage de produits (2) est rebasculée vers sa position horizontale de départ (A) pour réceptionner un autre produit ou pour remettre les produits déjà réceptionnés.

19. Procédé selon une des revendications 12 à 18,
**caractérisé en ce** des produits déjà présents sur la bande sans fin (8) sont transférés vers une bande de transport de raccordement (13) orientée.

20. Procédé selon la revendication 19,
**caractérisé en ce que** des produits transférés sur la bande de transport de raccordement (13) sont identifiés par un dispositif de reconnaissance de produits (14), notamment un scanner.

21. Procédé selon la revendication 19 ou 20,
**caractérisé en ce que** des produits transférés sur la bande de transport de raccordement (13) sont détectés visuellement ou, de préférence, documentés au moyen d'un dispositif de traitement d'images (40).

22. Procédé selon une des revendications 19 à 21,
**caractérisé en ce que** les produits remis par la bande de transport de raccordement sont emballés dans un poste d'emballage (41).
